# EUROPÄISCHE PATENTSCHRIFT

(11) **EP 3 812 106 B1**
(45) Veröffentlichungstag und Bekanntmachung des Hinweises auf die Patenterteilung: **14.09.2022**
(21) Anmeldenummer: 20197665.1
(22) Anmeldetag: 23.09.2020
(51) Int. Cl.: B25J 9/16

(54) **ROBOTERANORDNUNG, VERFAHREN ZUM BETREIBEN DER ROBOTERANORDNUNG, COMPUTERPROGRAMM SOWIE MASCHINENLESBARES SPEICHERMEDIUM**
ROBOT ASSEMBLY, METHOD FOR OPERATING THE ROBOT ASSEMBLY, COMPUTER PROGRAM AND MACHINE READABLE STORAGE MEDIUM
AGENCEMENT DE ROBOT, PROCÉDÉ DE FONCTIONNEMENT DE L'AGENCEMENT DE ROBOT, PROGRAMME INFORMATIQUE AINSI QUE SUPPORT D'ENREGISTREMENT LISIBLE PAR MACHINE

(30) Priorität: 23.10.2019 DE 102019216262
(43) Veröffentlichungstag der Anmeldung: 28.04.2021
(73) Patentinhaber: Robert Bosch GmbH, 70442 Stuttgart (DE)
(72) Erfinder: Jessen, Simon, 71254 Ditzingen (DE); Marx, Christoph, 73072 Donzdorf (DE)

(56) Entgegenhaltungen:
- EP-A1- 3 252 552
- EP-A2- 1 625 918
- WO-A1-2014/056533
- US-A1- 2015 094 848

## Beschreibung

### Stand der Technik

Die vorliegende Erfindung bezieht sich auf einen Roboter, wobei der Roboter mindestens eine kinematische Kette sowie mindestens einen Endeffektor aufweist, wobei die kinematische Kette und/oder der Endeffektor zur Durchführung einer Aufgabe in einem Arbeitsbereich bewegbar sind, mit einer Steuereinrichtung zur Eingabe, Festlegung und/oder Einstellung der Aufgabe, wobei die Steuereinrichtung ein Steuermodul aufweist, welches ausgebildet ist, einen Pfad zur Durchführung der Aufgabe zu planen und den Roboter basierend auf dem Pfad anzusteuern.

In Produktionsanlagen, wie z.B. in der Logistik und in anderen Anlagen, kommen häufig Kinematiken (Roboter) zum Einsatz, um beispielsweise Teile zu transportieren und/oder zu montieren. Die Bewegungen beziehungsweise Aufgaben, die die Roboter abarbeiten sollen, programmiert ein Benutzer typischerweise vorher ein. Dazu muss der Benutzer genau wissen, wie sich der Roboter verhält und/oder bewegt, um Kollisionen zwischen Roboter und der Umgebung und/oder zwischen Roboter und Roboter zu vermeiden. Im Fall eines Fehlers oder einer Kollision, ist es erforderlich, eine sogenannte Grundstellungsfahrt durchzuführen, wobei Kinematiken, Zuführeinrichtungen usw. in eine Ausgangsstellung gebracht werden, um einen definierten Zustand innerhalb der Anlage herzustellen.

Die Druckschrift EP 1 625 918 A2, die den nächstkommenden Stand der Technik bildet, offenbart ein Programmiergerät zur Erstellung eines Programms zur Rückführung eines Roboters in seine Warteposition, wenn der Roboter durch einen Fehler angehalten wird. Eine Robotersteuerungsvorrichtung ist über eine Netzwerkleitung mit der Programmiervorrichtung verbunden. Wenn der Roboter während des Betriebs durch den Fehler gestoppt wird, werden Informationen einschließlich Daten einer Position, an der der Roboter gestoppt ist, an die Programmiervorrichtung übertragen. Das Programmiergerät erstellt auf der Grundlage der Layoutdaten, der empfangenen Informationen und der Daten einschließlich der Lernpositionen und der Attributdaten der Positionen das Rückfahrprogramm, mit dem der Roboter von der Stopp-Position in die Warteposition zurückgefahren werden kann, ohne die Peripheriegeräte zu stören. Das Rückfahrprogramm wird mit Hilfe einer Offline-Simulationsfunktion des Programmiergeräts ausgeführt. Das Programm wird an das Robotersteuergerät übertragen, nachdem festgestellt wurde, dass keine Störungen auftreten werden. Der Roboter kann durch Ausführen des Rückholprogramms sicher in die Warteposition zurückkehren.

Die Druckschrift US 2015/094848 A1 beschreibt eine Steuereinrichtung einer Maschine mit mehreren lagegeregelten Achsen, welche unter Abarbeitung eines Systemprogramms die lagegeregelten Achsen gemäß einem Teileprogramm ansteuert. Durch die Ansteuerung der lagegeregelten Achsen wird ein Endeffektor entlang einer durch das Teileprogramm definierten Bahn über mindestens ein Zwischenglied relativ zu einem Grundkörper der Maschine lagegeregelt verfahren. Die Steuereinrichtung prüft unter Abarbeitung des Systemprogramms vor dem Ansteuern der lagegeregelten Achsen mittels eines parametrierbaren Modells der Maschine, ob das Verfahren des Endeffektors entlang der durch das Teileprogramm definierten Bahn kollisionsfrei möglich ist. Die Steuereinrichtung nimmt vor dem Prüfen des Teileprogramms Anfangsmesswerte entgegen, die für eine tatsächliche Konfiguration der Maschine charakteristisch sind, ermittelt anhand der Anfangsmesswerte Parameter des Modells und parametriert das Modell gemäß der ermittelten Parameter.

Die Druckschrift DE 10 2013 203 547 A1 beschreibt eine Roboterarbeitsplatzanordnung mit einem Roboter, der in einem Arbeitsbetrieb und in einem Kollaborationsbetrieb betreibbar ist und eine Erfassungseinrichtung zur Erfassung einer Person in dem Erfassungsbereich aufweist. Ferner umfasst die Roboterarbeitsplatzanordnung eine Steuereinrichtung zur Ansteuerung des Roboters, wobei die Steuereinrichtung den Roboter bei der Erfassung der Person im Erfassungsbereich dazu ansteuert, vom Arbeitsbetrieb in den Kollaborationsbetrieb zu wechseln. Bei einem Heraustreten der Person aus dem Erfassungsbereichsabschnitt wird der Roboter noch für eine Blockierdauer blockiert.

### Offenbarung der Erfindung

Erfindungsgemäß wird eine Roboteranordnung mit den Merkmalen des Anspruchs 1 vorgeschlagen. Ferner werden ein Verfahren, ein Computerprogramm und ein maschinenlesbares Speichermedium vorgeschlagen. Bevorzugte und/oder vorteilhafte Ausführungsformen ergeben sich aus der nachfolgenden Beschreibung, den Unteransprüchen und den beigefügten Figuren.

Es wird eine Roboteranordnung vorgeschlagen. Die Roboteranordnung ist beispielsweise eine Roboteranordnung in der Produktion, in der Messtechnik oder in der Logistik. Mittels der Roboteranordnung können Gegenstände bearbeitet, transportiert und/oder vermessen werden. Beispielsweise ist die Roboteranordnung Teil einer Fertigungslinie oder einer Logistiklinie.

Die Roboteranordnung weist dabei mindestens oder genau einen Roboter auf. Der Roboter ist im Speziellen als ein kartesischer Roboter ausgebildet, ferner kann der Roboter ein Scara-Roboter, ein Mehrarmroboter, ein Mehrachsroboter, ein fahrerloses Transportsystem oder eine lineare Achse bilden oder umfassen. Beispielsweise kann der Roboter eine Montageaufgabe, eine Transportaufgabe oder eine Messaufgabe erfüllen. Der Roboter weist einen Arbeitsbereich auf und/oder definiert einen Arbeitsbereich. Der Arbeitsbereich ist vorzugsweise ein Volumen, im Speziellen eine Roboterzelle. Insbesondere kann die Roboteranordnung eine Mehrzahl an Robotern, beispielsweise mindestens fünf oder zehn Roboter, umfassen. Umfasst die Roboteranordnung mehrere Roboter, so können die Roboter gleichartig oder unterschiedlich ausgebildet sein. Ferner ist es vorgesehen, dass die Roboter einer Roboteranordnung miteinander interagieren können und zum Kollaborationsbetrieb ausgebildet sind.

Der Roboter weist eine kinematische Kette sowie mindestens einen Endeffektor auf. Beispielsweise kann die kinematische Kette zum Anfahren von statischen oder dynamischen Punkten ausgebildet sein. Ein statischer Punkt ist insbesondere ein Punkt innerhalb des Arbeitsbereiches, welcher sich über einen Arbeits- oder Montageprozess oder mehrere Arbeits- und/oder Montageprozesse, nicht verändert, beispielsweise kann die kinematische Kette kontinuierlich zwischen diesen festen Punkten Gegenstände transportieren. Dynamische Punkte sind beispielsweise Punkte, die sich verändern mit der Zeit, beispielsweise durch Veränderung der Montageaufgabe, durch Auswählen eines anderen Ursprungs oder Rohstofflagers oder einen Werkzeugwechsel. Insbesondere ist der Endeffektor an der kinematischen Kette, insbesondere beweglich, angeordnet. Mittels des Endeffektors ist ein Objekt, ein Gegenstand und/oder ein Werkstück greifbar, haltbar, bearbeitbar und/oder vermessbar. Der Endeffektor kann hierzu beispielsweise ein Greifer, ein Werkzeug oder Messgerät sein. Insbesondere kann der Roboter mehr als einen Endeffektor aufweisen, wobei die Endeffektoren vorzugsweise miteinander zur Kollaboration ausgebildet sind, und beispielsweise ein Objekt von einem Aktor zum nächsten Aktor übergeben werden kann. Insbesondere ist der Endeffektor und/oder die kinematische Kette in dem Arbeitsbereich verschwenkbar, verfahrbar und/oder verdrehbar.

Zur Durchführung einer Aufgabe sind die kinematische Kette, insbesondere ein Teil der kinematischen Kette, und/oder der Endeffektor in dem Arbeitsbereich bewegbar. Die Aufgabe ist beispielsweise ein Teilschritt oder ein gesamter Ablauf zur Herstellung, zur Bearbeitung, zum Transport und/oder zum Vermessen des Werkstücks, des Objektes und/oder des Gegenstandes. Beispielsweise kann der Arbeitsbereich definiert werden als der Abschnitt und/oder Raum, in welchem die kinematische Kette und der Endeffektor des Roboters die Aufgabe ausführen können. Die kinematische Kette und/oder der Endeffektor können hierzu Bereiche und/oder Punkte des Arbeitsbereichs insbesondere anfahren, abfahren und/oder einnehmen.

Die Roboteranordnung weist eine Steuereinrichtung auf, welche zur Eingabe, Festlegung und/oder Einstellung der Aufgabe ausgebildet und/oder geeignet ist. Insbesondere ist die Aufgabe durch einen Benutzer an der Steuereinrichtung eingebbar, festlegbar und/oder einstellbar. Insbesondere kann die Steuervorrichtung integrierbar und/oder integriert in der Roboteranordnung sein. Die Steuereinrichtung ist vorzugsweise ein Hardwaremodul. Alternativ kann die Steuereinrichtung als ein Softwaremodul ausgebildet sein, beispielsweise auf einer Rechnereinheit, einem Prozessor oder einem Mikrochip. Die Steuereinrichtung ist vorzugsweise eine zentrale Steuereinrichtung für den und/oder die Mehrzahl an Robotern. Roboter und Steuereinrichtung sind dabei datentechnisch miteinander verbunden, beispielsweise durch eine Kabelleitung, alternativ durch eine kabellose Verbindung.

Die Steuereinrichtung weist ein Steuermodul auf. Mittels des Steuermoduls ist ein Pfad zur Durchführung der Aufgabe durch den Roboter und/oder durch die Roboteranordnung planbar, wobei der Roboter bzw. die Roboteranordnung basierend auf dem Pfad durch das Steuermodul angesteuert wird und/oder ansteuerbar ist. Insbesondere ist der Pfad eine Beschreibung der Bewegung des Endeffektors im Arbeitsbereich. Vorzugsweise erfolgt die Planung der Aufgabe und/oder des Pfades und das Ansteuern des Roboters in einem gemeinsamen Modul und/oder in einer gemeinsamen Programmierumgebung. Beispielsweise ist der Pfad ein linearer oder gekrümmter Pfad.

Die Steuereinrichtung weist ein Kollisionsüberwachungsmodul auf. Mittels des Kollisionsüberwachungsmoduls ist eine Abrückstrategie bei einer Kollision des Roboters, insbesondere der kinematischen Kette und/oder der Endeffektor, mit einer in dem Arbeitsbereich angeordneten Kollisionsgeometrie planbar, wobei der Roboter bzw. die Roboteranordnung basierend auf der Abrückstrategie durch das Steuermodul angesteuert wird und/oder ansteuerbar ist. Bevorzugt sind das Steuermodul und das Kollisionsüberwachungsmodul hierzu datentechnisch miteinander verbunden. Die Kollisionsgeometrie kann ein in dem Arbeitsbereich angeordnetes Kollisionsobjekt oder auch der Roboter selbst sein.

Im Rahmen der Erfindung ist vorgesehen, dass die Steuereinrichtung ein Simulationsmodul aufweist, welches zur Simulation der Abrückstrategie ausgebildet ist. In dem Simulationsmodul ist ein 3D-Modell der Roboteranordnung hinterlegt. Das 3D-Modell ist als ein CAD-Modell des Arbeitsbereiches und/oder des Roboters und/oder der Kollisionsgeometrie ausgebildet. Hierzu ist das Simulationsmodul beispielsweise als ein Softwaremodul, insbesondere eine 3D-Grafiksoftware, ausgebildet. Insbesondere sind in dem 3D-Modell der Roboter, vorzugsweise die kinematische Kette und/oder der Endeffektor, sowie das Objekt, der Gegenstand und/oder das Werkstück, als die Kollisionsgeometrie, dargestellt. Mittels des Kollisionsüberwachungsmoduls ist eine Abrückfahrt mit einem minimalen Abrückpfad basierend auf dem 3D-Modell berechenbar und an das Steuermodul als die Abrückstrategie übermittelbar. Hierzu kann beispielsweise ein Algorithmus zur kollisionsfreien Pfadplanung in dem Kollisionsüberwachungsmodul hinterlegt sein. Das Simulationsmodul ist ausgebildet, die Abrückstrategie zu simulieren. Dabei wird der kürzeste Pfad aus der Kollisionsgeometrie als der minimale Abrückpfad gesucht. Optional kann ein vom Benutzer vorgegebener Abrückvektor für die Abrückstrategie genutzt werden. Die Suche nach dem kollisionsfreien Abrückpfad erfolgt vor der Ansteuerung des Roboters zur Durchführung der Abrückbewegung. Bevorzugt sind das Simulationsmodul und das Kollisionsüberwachungsmodul datentechnisch miteinander verbunden.

Der Erfindung liegt die Überlegung zugrunde, im Fall eines Fehlers oder einer Kollision in der Anlage eine sogenannte Grundstellungsfahrt durchzuführen, um die Aufgabe neu zu starten. Durch die Abrückstrategie wird somit eine Fehlerbehandlung in der Steuerungseinrichtung implementiert, welche im Fehlerfall den Roboter, insbesondere dessen Kinematiken, aus jeder Stellung heraus kollisionsfrei in die Grundstellung zurück bewegen kann. Ein weiterer Vorteil besteht darin, dass aufgrund der Simulation und der Suche nach dem kürzesten Abrückpfad in einfacher Weise eine Abrückstrategie vorgeschlagen wird, welche unabhängig der Komplexität des Arbeitsbereichs und/oder der Kollisionsgeometrie jederzeit durchgeführt werden kann. Zudem müssen keine separaten Strategien für die Grundstellungsfahrt für unterschiedliche Abschnitte des Arbeitsbereichs festgelegt werden. Somit kann der Zeitaufwand für die Grundstellungsfahrt und das Fehlerhandling gering gehalten werden und somit Kosten reduziert werden.

Besonders bevorzugt ist es, dass in dem Kollisionsüberwachungsmodul eine Grundstellung für die Grundstellungsfahrt des Roboters hinterlegt ist. Insbesondere ist die Grundstellung eine definierte Endlage des Roboters, insbesondere der kinematischen Kette sowie des Endeffektors. Mittels des Kollisionsüberwachungsmoduls ist eine kollisionsfreie Grundstellungsfahrt des Roboters von einer Abrückstellung in die Grundstellung als Teil der Abrückstrategie planbar. Insbesondere ist das Steuermodul ausgebildet, die Grundstellungsfahrt anschließend an die Abrückfahrt anzuwenden. Dabei ist der Endeffektor bzw. die kinematische Kette in der Abrückstellung außerhalb der Kollisionsgeometrie angeordnet, sodass eine Kollisionsfreiheit der anschließenden Grundstellungsfahrt gewährleitstet wird. Prinzipiell kann die Grundstellungsfahrt durch eine PTP-Bewegung in die Grundstellung umgesetzt werden. Bevorzugt jedoch kann in dem Simulationsmodul ein minimaler und/oder kollisionsfreier Grundstellungspfad für die Grundstellungsfahrt simuliert und durch das Kollisionsüberwachungsmodul berechnet werden.

Erfindungsgemäß ist mittels des Simulationsmoduls ein Vektorraum um den Endeffektor in dem 3D-Modell aufspannbar. Bevorzugt ist der Vektorraum im Kollisions- oder Fehlerfall aufspannbar. Insbesondere ist das dem Vektorraum zugrunde liegende Koordinatensystem ein Weltkoordinatensystem oder ein Basiskoordinatensystem oder ein Werkzeugkoordinatensystem oder ein Objektkoordinatensystem. Das Simulationsmodul ist ausgebildet, in dem 3D-Modell einen Vektorraum um einen Referenzpunkt aufzuspannen. Prinzipiell kann der Referenzpunkt als ein gedachter oder physischer Punkt des Roboters durch den Benutzer definiert und in dem Simulationsmodul hinterlegt werden. Besonders bevorzugt definiert der Endeffektor einen Werkzeugmittelpunkt, auch als "Tool Center Point (TCP)" bekannt, als den Referenzpunkt, wobei der Vektorraum um den aktuellen Werkzeugmittelpunkt gebildet wird. Der Vektorraum bildet mit seinen Eckpunkten und/oder Mittelpunkten jeweils einen Richtungspunkt, wobei ausgehend von dem Referenzpunkt in Richtung der Richtungspunkte Richtungsvektoren gebildet sind. Vorzugsweise bilden die Richtungsvektoren lineare Pfade für den Roboter, insbesondere den Endeffektor, welche in der Simulation zur Suche des minimalen Abrückpfads durch den Roboter abgefahren werden können.

Erfindungsgemäß ist der Vektorraum durch ein Quader gebildet. Der Quader ist um den Referenzpunkt aufgespannt, wobei im Falle einer Kollision der aktuelle Referenzpunkt ein Zentrum des Quaders definiert. Der Quader definiert dabei mit seinen Ecken die Eckpunkte. Die Mittelpunkte sind dabei jeweils auf den Quaderflächen und den Quaderkanten mittig zwischen den Eckpunkten angeordnet. Der Quader weist somit pro Seite vier Eckpunkte und fünf Mittelpunkte auf. Bei alternativen Ausführungsformen, die nicht Teil der vorliegenden Erfindung sind, kann der Vektorraum auch durch andere geometrische Formen wie beispielsweise Sphären, Zylinder oder komplexere Geometrien gebildet sein.

Erfindungsgemäß ist vorgesehen, dass mittels des Simulationsmoduls eine Kollisionsprüfung durch datentechnisches Abtasten der Richtungsvektoren ausgehend von dem Referenzpunkt simulierbar ist. In der Simulation werden die durch die Richtungsvektoren definierten linearen Pfade ausgehend von dem Referenzpunkt in Richtung der Richtungspunkte abgetastet. Vorzugsweise dient das Abtasten der Richtungsvektoren dazu, um verschiedene Bewegungsrichtungen des Endeffektors aus der Kollisionsgeometrie zu testen. Dabei ist unter "Abtasten" ein simuliertes Abtasten oder anders ausgedrückt eine Simulation der Abrückstrategie entlang mindestens eines Richtungsvektors zu verstehen. Bei einer kollisionsfreien Abtastung der Richtungsvektoren wird jeweils eine zugehörige Distanz zwischen dem Referenzpunkt und einem kollisionsfreien Abtastpunkt in dem Kollisionsüberwachungsmodul hinterlegt. Dabei wird der kollisionsfreie Abtastpunkt als ein Punkt definiert, bei dem im Rahmen der Kollisionsprüfung ein Übergang von einer Kollision zu einer Kollisionsfreiheit festgestellt wird. Die Abrückstrategie ist auf Basis der hinterlegten Distanz und/oder des zugehörigen kollisionsfreien Abtastpunktes durch das Kollisionsüberwachungsmodul planbar.

In einer Weiterbildung ist vorgesehen, dass das Simulationsmodul ausgebildet ist, die Kollisionsprüfung für einen Richtungsvektor zu beenden, wenn ein Übergang von der Kollision zu der Kollisionsfreiheit festgestellt wird. Insbesondere wird die Prüfung auf Kollisionsfreiheit entlang eines Richtungsvektors gestoppt, wenn keine Kollision mehr detektiert wird. Vorzugsweise wird an jeder abgetasteten Position die Kollision zwischen dem Roboter und der Kollisionsgeometrie geprüft, wobei das Prüfen des Richtungsvektors in der aktuellen Richtung gestoppt wird, sobald keine Kollision mehr auftritt. Anschließend wird die zugehörige Distanz für diesen Richtungsvektor zwischen dem kollisionsfreien Abtastpunkt und den Referenzpunkt durch das Simulationsmodul ermittelt und in dem Kollisionsüberwachungsmodul hinterlegt.

In einer weiteren Konkretisierung wird vorgeschlagen, die Kollisionsprüfung mittels des Simulationsmoduls für jeden der Richtungsvektoren zu simulieren. Insbesondere können die Richtungsvektoren hierzu einzeln nacheinander abgetastet werden. Alternativ sind auch bei der Abtastung der Richtungsvektoren Linearkombinationen zulässig. Alternativ können auch einer oder mehrere Richtungsvektoren als Vektorfunktion ausgebildet sein. Vorzugsweise wird für jeden der Richtungsvektoren ein kollisionsfreier Abtastpunkt gesucht und eine zugehörige Distanz zu dem Referenzpunkt ermittelt und in dem Kollisionsüberwachungsmodul hinterlegt. Im Speziellen wird die Simulation beendet nachdem alle Richtungsvektoren auf Kollisionsfreiheit geprüft wurden.

Erfindungsgemäß ist vorgesehen, dass das Kollisionsüberwachungsmodul ausgebildet ist, basierend auf der durch die Kollisionsprüfung ermittelten Distanzen und/oder der kollisionsfreien Abtastpunkte den minimale Abrückpfad, insbesondere die Richtung mit minimaler Distanz zu dem kollisionsfreien Abtastpunkt, zu berechnen und an das Steuermodul zu übermitteln. Das Steuermodul ist ausgebildet, basierend auf dem minimalen Abrückpfad den realen Roboter anzusteuern, wobei der Roboter entlang des minimalen Abrückpfades aus einem Kollisionsbereich in die Abrückstellung gefahren wird.

In einer weiteren Ausführung ist vorgesehen, dass für den Endeffektor in dem 3D-Modell eine Vorzugsrichtung für eine festgelegte Kollisionsgeometrie hinterlegt ist. Insbesondere ist die Vorzugsrichtung eine festgelegte Abrückrichtung in welcher der Endeffektor für bestimmte Kollisionsgeometrien abgerückt wird. Dies gilt insbesondere für Objekte wie beispielsweise Paletten oder Nester mit denen der Roboter bzw. der Endeffektor interagiert. Mittels des Kollisionsüberwachungsmoduls ist basierend auf der Vorzugsrichtung eine Abrückfahrt planbar, wenn der Endeffektor mit der Kollisionsgeometrie in Kollision steht. Vorzugsweise ist die Vorzugsrichtung durch den Benutzer in dem 3D-Modell, z.B. über eine Eingabeeinheit, definierbar und/oder festlegbar und/oder einstellbar.

Insbesondere kann für jedes Kollisionsobjekt eine zugehörige Vorzugsrichtung für einen festgelegten Kollisionsbereich definiert werden. Weicht das Kollisionsobjekt und/oder der Kollisionsbereich von den festgelegten Daten ab, so wird der Abrückpfad mit der kürzesten Distanz, wie bereits beschrieben, gesucht und angewendet. Insbesondere ist das Kollisionsüberwachungsmodul ausgebildet, zu entscheiden ob für das Kollisionsobjekt für das eine Vorzugsrichtung festgelegt ist die Abrückfahrt auf Basis der Vorzugsrichtung oder auf Basis der ermittelten Abrückstrategie durchgeführt werden soll. Bevorzugt kann die Entscheidung auf Basis des Kollisionsortes zwischen dem Roboter und der Kollisionsgeometrie getroffen werden.

Ein weiterer Gegenstand der Erfindung betrifft ein Verfahren zum Betreiben der Roboteranordnung wie diese bereits zuvor beschrieben wurde. Dabei ist es vorgesehen, dass, der Pfad zur Durchführung der Aufgabe mittels des Steuermoduls geplant, insbesondere durch einen Benutzer festgelegt, eingegeben und/oder eingestellt, wird und der Roboter basierend auf dem Pfad zur Durchführung der Aufgabe durch das Steuermodul angesteuert wird. Bei einer Kollision des Roboters mit der Kollisionsgeometrie wird die Abrückstrategie durch das Kollisionsüberwachungsmodul geplant. Vor Anwendung der Abrückstrategie, wird die Abrückstrategie basierend auf dem 3D-Modell durch das Simulationsmodul simuliert. Basierend auf dem 3D-Modell wird der Abrückpfad gesucht und durch das Kollisionsüberwachungsmodul berechnet. Hierzu wird in dem 3D-Modell der Vektorraum um den Endeffektor aufgespannt und ausgehend von dem Kollisionsbereich die einzelnen Richtungsvektoren in dem Vektorraum abgetastet. Dabei wird an jedem Abtastpunkt eine Prüfung auf Kollisionsfreiheit durch das Kollisionsüberwachungsmodul durchgeführt, wobei bei einer kollisionsfreien Abtastung eine zugehörige Distanz zwischen dem Kollisionsbereich und dem kollisionsfreien Abtastpunkt in dem Kollisionsüberwachungsmodul hinterlegt wird. Durch das Kollisionsüberwachungsmodul wird auf Basis der hinterlegten Distanzen der Abrückpfad ermittelt. Zusätzlich kann in dem Simulationsmodul die Abrückfahrt für ein bestimmtes Kollisionsobjekt und/oder Kollisionsbereich festgelegt werden, wobei vorzugsweise die Absrückstrategie auf Basis der simulierten Abrückfahrt oder in der Vorzugsrichtung durchgeführt wird. Die entsprechende Abrückstrategie wird anschließend an das Steuermodul übermittelt, wobei der Roboter basierend auf der Abrückstrategie durch das Steuermodul zur Durchführung der Abrückstrategie angesteuert wird. Bevorzugt umfasst die Abrückstrategie eine Abrückfahrt und eine daran anschließende Grundstellungsfahrt.

Zusammengefasst wird somit in einem ersten Schritt des Verfahrens der kürzeste Weg (minimaler Abrückpfad) aus der Kollisionsgeometrie heraus gesucht, in einem zweiten Schritt wird der Roboter entlang des kürzesten Weges aus dem Objekt (Kollisionsobjekt) heraus gefahren, in einem dritten Schritt wird die kollisionsfreie Bahn (Grundstellungsfahrt) zur Grundstellung berechnet und in einem vierten Schritt wird der Roboter entlang der kollisionsfreien Bahn in die Grundstellung gefahren.

Alternativ kann in einem ersten Schritt des Verfahrens der Abrückpfad in die Abrückstellung und der Grundstellungspfad von der Abrückstellung in die Grundstellung, insbesondere der kürzeste Weg (minimaler Abrückpfad und minimaler Grundstellungspfad), aus der Kollisionsgeometrie heraus gesucht werden. In einem zweiten Schritt wird der Roboter entlang des Abrückpfads und des Grundstellungspfads aus dem Objekt (Kollisionsobjekt) heraus gefahren.

Einen weiteren Gegenstand der Erfindung bildet ein Computerprogramm. Das Computerprogramm ist insbesondere auf einem Datenträger gespeichert und/oder speicherbar. Der Datenträger ist vorzugsweise eine CD, eine DVD oder ein anderweitiger Massenspeicher. Das Computerprogramm ist ausgebildet, bei Ausführung auf einem Computer, einem Rechner, der Roboteranordnung und/oder der Steuervorrichtung die Schritte des vorherigen Verfahrens durchzuführen.

Einen weiteren Gegenstand der Erfindung bildet ein maschinenlesbares Speichermedium. Das maschinenlesbare Speichermedium ist insbesondere als der Datenträger ausgebildet und im Speziellen eine CD, DVD oder USB-Stick. Auf dem maschinenlesbaren Speichermedium ist das Computerprogramm wie vorher beschrieben gespeichert.

Weitere Vorteile, Wirkungen und Ausgestaltungen der Erfindung ergeben sich aus den beigefügten Figuren und deren Beschreibung. Dabei zeigen:
- Figur 1: eine schematische Darstellung einer Roboteranordnung als ein Ausführungsbeispiel der Erfindung;
- Figur 2: ein 3D-Modell der Roboteranordnung aus Figur 1;
- Figur 3: ein Vektorraum des 3D-Modells aus Figur 2;
- Figuren 4a, b: ein Roboter des 3D-Modells aus Figur 3 in verschiedenen Kollision mit einem Kollisionsobjekt.

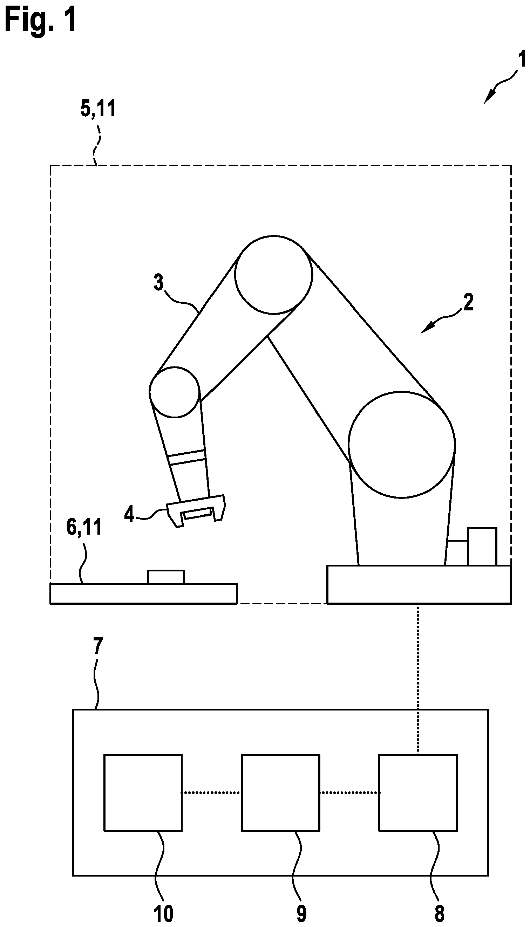

Figur 1 zeigt in einer schematischen Darstellung eine Roboteranordnung 1 als ein Ausführungsbeispiel der Erfindung. Die Roboteranordnung 1 ist beispielsweise Teil einer Fertigungs-, Produktions- oder Transportanlage. Die Roboteranordnung 1 umfasst mindestens einen Roboter 2. Der Roboter 2 ist als ein Knickarmroboter ausgebildet und weist eine kinematische Kette 3 auf. An dem Ende der kinematischen Kette 3 ist ein Endeffektor 4 angeordnet.

Der Endeffektor 4 ist als ein Greifer zum Greifen eines Werkstückes und/oder eines Gegenstandes ausgebildet. Die kinematische Kette 3 ist ausgebildet, den Endeffektor 4 in einem Arbeitsbereich 5 zur Durchführung einer Aufgabe zu bewegen, verfahren und/oder zu positionieren. Der Arbeitsbereich 5 wird beispielsweise durch einen Abschnitt einer Produktionshalle, Logistikzentrale, eines Raums oder einer Roboterzelle gebildet.

In dem Arbeitsbereich 5 ist mindestens eine Arbeitsstation 6 angeordnet. Die Arbeitsstation 6 ist beispielsweise ein Bearbeitungsplatz, an denen ein Bauteil in Teilschritten bearbeitet, verarbeitet und/oder vermessen wird. Der Roboter 2 ist ausgebildet, den Endeffektor 4 und/oder das gegriffene Objekt entlang eines Pfades im Arbeitsbereich 5 transportieren zu können.

Die Roboteranordnung 1 umfasst eine Steuereinrichtung 7. Die Steuereinrichtung 7 weist ein Steuermodul 8, ein Kollisionsüberwachungsmodul 9 sowie ein Simulationsmodul 10 auf. Die Steuereinrichtung 7 ist vorzugsweise als eine zentrale Rechnereinheit ausgebildet. Das Kollisionsüberwachungsmodul 9 ist datentechnisch mit dem Steuermodul 8 und mit dem Simulationsmodul 10 verbunden. Ferner ist das Steuermodul 8, und damit auch die Steuereinrichtung 7, datentechnisch mit dem Roboter 2 zu dessen Steuerung verbunden.

Das Steuermodul 8 dient dazu basierend auf der Aufgabe ein oder mehrere Pfade für den Endeffektor 4 in dem Arbeitsbereich festzulegen und/oder zu bestimmen. Das Kollisionsüberwachungsmodul 9 dient zur Überwachung der Pfade auf Kollisionsfreiheit, wobei bei einer Kollision mit einer Kollisionsgeometrie 11 eine Abrückstrategie geplant und an das Steuermodul 8 übermittelt wird. Die Kollisionsgeometrie 11 ist beispielsweise durch Gegenstände im Arbeitsbereich 5 und/oder eine Wand der Roboterzelle gebildet. Das Simulationsmodul 10 dient zur Simulation der Abrückstrategie basierend auf einem 3D-Modell. Hierzu kann in dem 3D-Modell nach einem optimalen Abrückpfad, vorzugsweise der Pfad mit dem kürzesten Weg aus der Kollisionsgeometrie 11, gesucht und zur Planung der Abrückstrategie an das Kollisionsüberwachungsmodul 8 übermittelt werden.

Durch Betreiben des Roboters 2 kann es zu Kollisionen des Endeffektors 4, der kinematischen Kette 3 oder des Roboters 2 mit Gegenständen im Arbeitsbereich 5 (Kollisionsgeometrie 11) kommen. Kommt es zu einer Kollision oder einen Fehler in der Anlage, so ist es erforderlich, eine sogenannte Grundstellungsfahrt durchzuführen. Hierbei werden die kinematische Kette 3, der Endeffektor 4 usw. in eine Grundstellung (Ausgangsstellung) gebracht, um einen definierten Zustand innerhalb des Arbeitsbereichs 5 herzustellen. Dabei ist die Grundstellung des Roboters 2 in dem Kollisionsüberwachungsmodul 9 hinterlegt, wobei das Kollisionsüberwachungsmodul 9 ausgebildet ist, eine kollisionsfreie Grundstellungsfahrt zu planen und an das Steuermodul 8 zu übermitteln.

Die Grundstellungsfahrt ist notwendig um den Prozess neu starten zu können. Hierbei sollte der Benutzer (Applikateur) neben dem Programmablauf eine Fehlerbehandlung in der Steuereinrichtung 7 (Applikation) implementieren, die im Kollisions- oder Fehlerfall den Roboter 2, insbesondere den Endeffektor 4 und/oder die kinematische Kette 3, aus jeder Stellung heraus kollisionsfrei in die Grundstellung zurück bewegen kann.

Im konkreten Fall einer Roboterzelle muss der Roboter 2 im Kollisions- bzw. Fehlerzustand von seiner aktuellen Position in seine Grundstellung gefahren werden. Hierbei ist es jedoch nicht möglich den Roboter 2 direkt, z.B. über eine PTP-Bewegung, in die Grundstellung zu bewegen, da diese direkte Bewegung meist zu Kollisionen zwischen Roboter 2 und der Umgebung (Roboterzelle) führt. Üblicherweise wird im Rahmen der Fehlerbehandlung die Roboterzelle in verschiedene Bereiche aufgeteilt, wobei für jeden Bereich eine zugehörige Abrückstrategie in Form einer auf den Bereich abgestimmten Bewegung durch den Benutzer programmiert wird. Je nachdem, in welchem Bereich sich der Roboter im Fehlerfall befindet, wird die jeweilige Abrückstrategie gewählt, um den Roboter aus seiner aktuellen Position in die Grundstellung zu fahren. Je nach Komplexität der Zelle (wenig Bewegungsfreiraum für den Roboter) kann dies allerdings sehr aufwändig sein und ist häufig mit einem hohem Zeitaufwand und damit hohen Kosten verbunden.

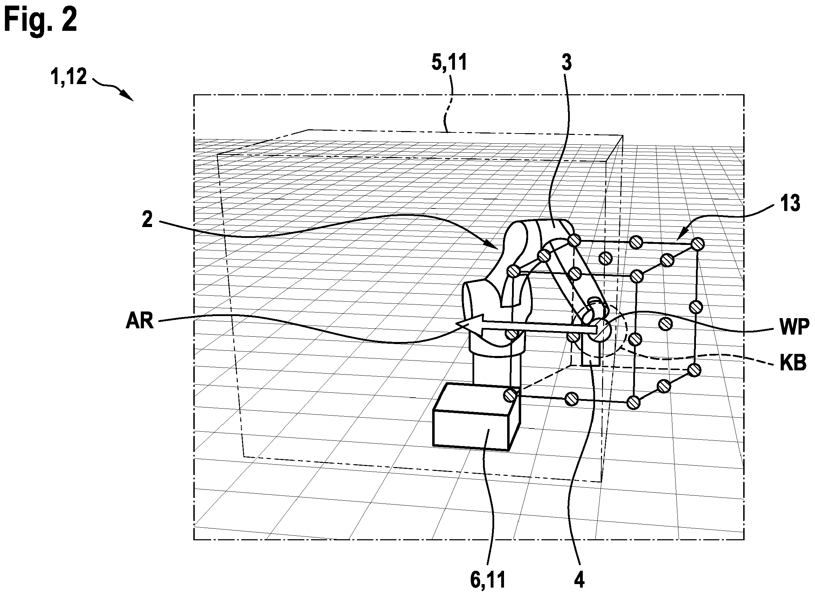

Im Rahmen der Erfindung wird eine automatisierte kollisionsfreie Grundstellungsfahrt für den Roboter 2 vorgeschlagen, wobei der Roboter 2 im Kollisions- bzw. Fehlerfall aus einer beliebigen Position in seine Grundstellung gefahren werden kann, ohne eine Abrückstrategie für unterschiedliche Bereiche festlegen zu müssen. Das Grundprinzip zur Planung der Abrückstrategie wird nachfolgend in Figur 2 beschrieben.

Figur 2 zeigt ein 3D-Modell 12 der Roboteranordnung 1, wobei der Roboter 2, der Arbeitsbereich 5 sowie die Arbeitsstation 6 in dem 3D-Modell 12 dargestellt sind. Beispielsweise kann das 3D-Modell 12 über eine Anzeigeeinrichtung, z.B. ein Bildschirm, dargestellt werden. In der gezeigten Darstellung steht der Roboter 2 in einem Kollisionsbereich KB mit der Wand der Roboterzelle in Kollision. Zur Planung der Abrückstrategie ist in dem Kollisionsüberwachungsmodul 9 ein Algorithmus zur kollisionsfreien Pfadplanung hinterlegt. Unter Zuhilfenahme des Algorithmus sowie dem 3D-Modell 12 wird im Fehler- bzw. Kollisionsfall eine kollisionsfreie Fahrt durch das Kollisionsüberwachungsmodul 9 in die Grundstellung berechnet. Da sich der Roboter 2 im Fehler- bzw. Kollisionsfall normalerweise bereits in einer Kollision mit der Kollisionsgeometrie 11 befindet, reicht es in diesem Fall nicht aus einen kollisionsfreien Pfad von einem Kollisionsbereich KB des Endeffektors 4 mit der Kollisionsgeometrie 11 direkt in Richtung der Grundstellung zu berechnen. Aufgrund dessen muss der Roboter 2 mit einer Abrückfahrt zunächst aus der Kollision, insbesondere aus dem Kollisionsbereich KB, heraus manövriert werden. Dabei umfasst die Abrückstrategie eine Abrückfahrt aus dem Kollisionsbereich KB sowie eine daran anschließende Grundstellungsfahrt in die Grundstellung.

Ein Verfahren zur Durchführung der Abrückstrategie umfasst dabei folgende Hauptschritte:
1. Suche eines minimalen Abrückpfads für die Abrückfahrt (kürzester Wegs aus der Kollisionsgeometrie 11/Kollisionsbereich KB heraus);
2. Roboter 2 führt Abrückfahrt aus;
3. Berechnung der Grundstellungsfahrt (kollisionsfreier Pfad zur Grundstellung);
4. Roboter 2 führt Grundstellungsfahrt aus.

Zur Suche des minimalen Abrückpfads wird um einen durch den Endeffektor 4 definierten Werkzeugmittelpunkt WP, als ein Referenzpunkt, ein Vektorraum 13 aufgespannt. Der Vektorraum 13 ist dabei als ein Quader definiert. Um den Roboter 2 bzw. den Endeffektor 4 aus der Kollisionsgeometrie 11 herauszufahren, müssen dabei verschiedene Bewegungsrichtungen getestet werden.

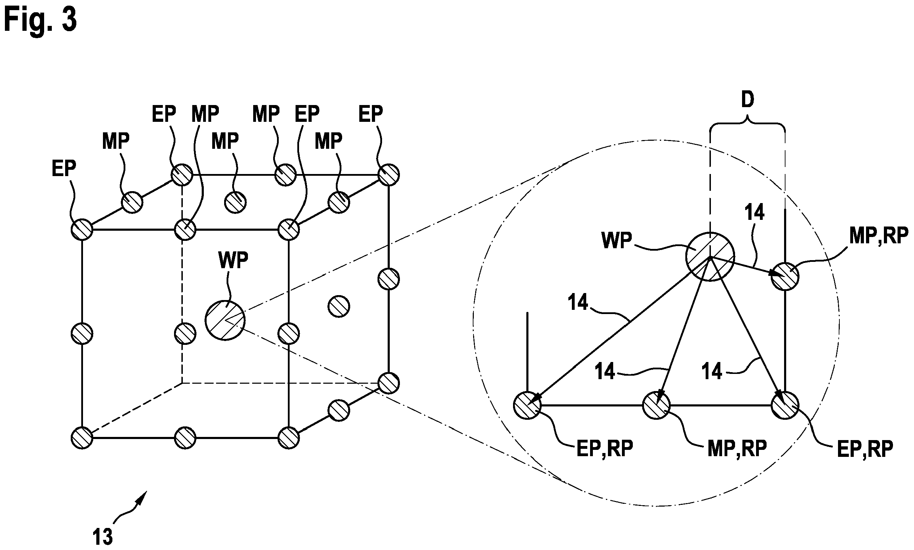

Wie in Figur 3 gezeigt, definiert der Vektorraum 13 mit seinen Eckpunkten EP und dazwischenliegenden Mittelpunkten MP jeweils einen Richtungspunkt RP. Ausgehend von dem Werkzeugmittelpunkt WP werden zu den jeweiligen Richtungspunkten RP Richtungsvektoren 14 gebildet, welche lineare Pfade für den Endeffektor 4 definieren.

Das Simulationsmodul 10 ist ausgebildet, die einzelnen Richtungsvektoren 14 abzutasten um den minimalen Abrückpfad zu suchen. In der Simulation werden dabei die durch die Richtungsvektoren 14 definierten linearen Pfade Stück für Stück in Richtung der Richtungspunkte RP abgetastet. Dabei wird an jeder abgetasteten Position die Kollision zwischen Roboter 2 und der Kollisionsgeometrie 11 durch das Kollisionsüberwachungsmodul 8 auf Kollisionsfreiheit geprüft. Insbesondere erfolgt die Kollisionsprüfung dabei solange bis keine Kollision mehr detektiert wird, dabei wird die Abtastung in der aktuellen Richtung gestoppt und eine Distanz D von dem Werkzeugmittelpunkt WP zu dem kollisionsfreien Abtastpunkt in dem Kollisionsüberwachungsmodul 8 gespeichert.

Nachdem die Richtungsvektoren 14 in alle Richtungen geprüft wurden, wird der minimale Abrückpfad durch das Kollisionsüberwachungsmodul 9 berechnet und als Abrückstrategie an das Steuermodul 8 übermittelt. Auf Basis des minimalen Abrückpfades wird der Endeffektor 4 des realen Roboters 2 aus dem Kollisionsbereich KB in einer Abrückrichtung AR, wie in Figur 2 dargestellt, herausgefahren bzw. in eine Abrückstellung gefahren. Die Abrückrichtung AR entspricht dabei der Richtung mit minimaler Distanz D, welche für die Abrückfahrt durch das Kollisionsüberwachungsmodul 9 ermittelt wurde. Anschließend wird die Grundstellungsfahrt durch das Steuermodul 8 angewendet, wobei der Roboter 2 von der Abrückstellung in die Grundstellung gefahren wird.

Der Vorteil der automatisierten Grundstellungsfahrt besteht somit darin, dass keine separaten Strategien für die Grundstellungsfahrt aus unterschiedlichen Bereichen der Anlage mehr notwendig sind. Dadurch ergibt sich bei der Erstellung der Applikation ein sehr geringer Zeitaufwand für die Implementierung der Grundstellungsfahrt und das Fehlerhandling, wodurch Kosten eingespart werden können.

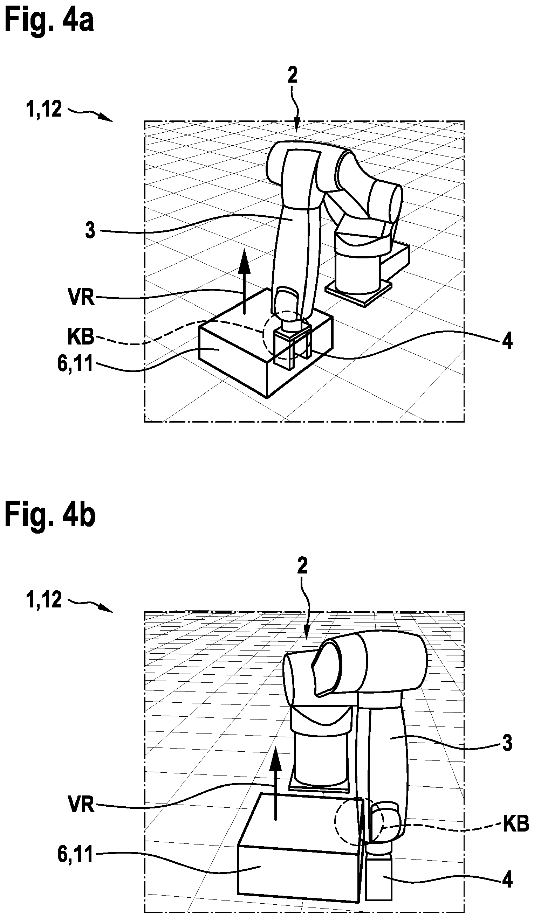

In den Figuren 4a, b ist jeweils das 3D-Modell 12 der Roboteranordnung 1 dargestellt. In der Figur 4a steht der Endeffektor 4 in einem Kollisionsbereich KB mit der die Kollisionsgeometrie 11 bildende Arbeitsstation 6 in Kollision. In der Figur 4b steht die kinematische Kette 3 in einem Kollisionsbereich KB mit der Kollisionsgeometrie 11 in Kollision.

Bei der Umsetzung der Abrückfahrt ist nicht immer der minimale Abrückpfad die beste Lösung. Dies gilt insbesondere für Objekte wie beispielsweise Paletten oder Nester mit denen der Roboter 2, insbesondere der Endeffektor, interagiert. In dem Simulationsmodul 8 kann deshalb optional eine Vorzugsrichtung VR für ein zugehöriges Kollisionsobjekt definiert werden, in welcher der Roboter 2 die Abrückfahrt bevorzugt durchführen soll. Die Vorzugsrichtung VR kann dabei durch den Benutzer für jedes entsprechende Kollisionsobjekt einzeln in dem Simulationsmodul 10, z.B. ein HMI/3DEditor, definiert, eingestellt oder geändert werden. Die Vorzugsrichtung VR ist dabei abhängig vom Ort des Kollisionsbereichs KB, wobei in Abhängigkeit des Ortes eine Entscheidung durch die Steuereinrichtung 7 getroffen wird, ob die Vorzugsrichtung VR oder die Abrückstrategie angewendet werden soll. Beispielsweise wird die Vorzugrichtung VR in dem in Figur 4a dargestellten Beispiel nur zum Abrücken verwendet, wenn der Endeffektor 4, insbesondere der Flansch oder das Werkzeug, mit dem Kollisionsobjekt in Kollision ist. Ist dies nicht der Fall, wie in Figur 4b dargestellt, so wird der Vektorraum 13, wie in Figur 2 dargestellt, aufgespannt und der minimale Abrückpfad, wie bereits zuvor beschrieben, aus dem Kollisionsbereich KB gesucht und angewendet.

## Patentansprüche

1. Roboteranordnung (1),
mit einem Roboter (2),
wobei der Roboter (2) mindestens eine kinematische Kette (3) sowie mindestens einen Endeffektor (4) aufweist, wobei die kinematische Kette (3) und/oder der Endeffektor (4) zur Durchführung einer Aufgabe in einem Arbeitsbereich (5) bewegbar ist,
mit einer Steuereinrichtung (7) zur Eingabe, Festlegung und/oder Einstellung der Aufgabe,
wobei die Steuereinrichtung (7) ein Steuermodul (8) aufweist, welches ausgebildet ist, einen Pfad zur Durchführung der Aufgabe zu planen und den Roboter (2) basierend auf dem Pfad anzusteuern,
wobei die Steuereinrichtung (7) ein Kollisionsüberwachungsmodul (9) aufweist, welches ausgebildet ist, bei einer Kollision des Roboters (2) mit einer in dem Arbeitsbereich (5) angeordneten Kollisionsgeometrie (11), eine Abrückstrategie zu planen und wobei das Steuermodul (8) ausgebildet ist, den Roboter (2) basierend auf der Abrückstrategie anzusteuern,
wobei die Steuereinrichtung (7) ein Simulationsmodul (10) aufweist, welches zur Simulation der Abrückstrategie eingerichtet ist, wobei in dem Simulationsmodul (10) ein 3D-Modell (12) der Roboteranordnung (1) hinterlegt ist, wobei das 3D-Modell (12) als ein CAD-Modell des Arbeitsbereiches (5) und/oder des Roboters (2) und/oder der Kollisionsgeometrie (11) ausgebildet ist,
und wobei das Kollisionsüberwachungsmodul (9) ausgebildet ist, auf Basis des 3D-Modells (12) eine Abrückfahrt mit einem Abrückpfad zu berechnen und an das Steuermodul (8) als die Abrückstrategie zu übermitteln,
**dadurch gekennzeichnet, dass**
das Simulationsmodul (10) ausgebildet ist, in dem 3D-Modell (12) einen Vektorraum (13) um einen Referenzpunkt, insbesondere einen Werkzeugmittelpunkt (WP) des Endeffektors (4), aufzuspannen, wobei der Vektorraum (13) zumindest mit seinen Eckpunkten (EP) und/oder Mittelpunkten (MP) jeweils einen Richtungspunkt (RP) zur Definition von Richtungsvektoren (14) bildet, wobei der Vektorraum (13) durch einen Quader gebildet ist, der mit seinen Ecken die Eckpunkte (EP) definiert und die Mittelpunkte (MP) jeweils auf den Quaderflächen und den Quaderkanten mittig zwischen den Eckpunkten (EP) angeordnet sind,
wobei das Simulationsmodul (10) ausgebildet ist, ausgehend von dem Referenzpunkt eine Kollisionsprüfung durch datentechnisches Abtasten der Richtungsvektoren (14) zu simulieren, indem die durch die Richtungsvektoren (14) definierten linearen Pfade ausgehend von dem Referenzpunkt in Richtung der Richtungspunkte (RP) abgetastet werden, wobei ein Punkt als ein kollisionsfreier Abtastpunkt definiert wird, bei dem im Rahmen der Kollisionsprüfung ein Übergang von einer Kollision zu einer Kollisionsfreiheit festgestellt wird und wobei eine zugehörige Distanz (D) zwischen dem Referenzpunkt und dem kollisionsfreien Abtastpunkt in dem Kollisionsüberwachungsmodul (9) hinterlegt wird,
wobei das Kollisionsüberwachungsmodul (9) ausgebildet ist, basierend auf der durch Kollisionsprüfung ermittelten Distanz (D) einen minimalen Abrückpfad zu berechnen und an das Steuermodul (8) als Teil der Abrückstrategie zu übermitteln.

2. Roboteranordnung (1) nach Anspruch 1, **dadurch gekennzeichnet, dass** in dem Kollisionsüberwachungsmodul (9) eine Grundstellung für den Roboter (2) hinterlegt ist, wobei das Kollisionsüberwachungsmodul (9) ausgebildet ist, eine kollisionsfreie Grundstellungsfahrt des Roboters (2) von einer Abrückstellung in die Grundstellung zu planen und an das Steuermodul (8) als Teil der Abrückstrategie zu übermitteln.

3. Roboteranordnung (1) nach Anspruch 1 oder 2, **dadurch gekennzeichnet, dass** das Simulationsmodul (10) ausgebildet ist, die Kollisionsprüfung für einen Richtungsvektor (14) zu beenden, wenn ein Übergang von der Kollision zu der Kollisionsfreiheit festgestellt wird.

4. Roboteranordnung (1) nach einem der vorhergehenden Ansprüche, **dadurch gekennzeichnet, dass** das Simulationsmodul (10) ausgebildet, die Kollisionsprüfung für jeden der Richtungsvektoren (14) durchzuführen.

5. Roboteranordnung (1) nach einem der vorhergehenden Ansprüche, **dadurch gekennzeichnet, dass** in dem 3D-Modell (12) eine Vorzugsrichtung (VR) für die Abrückfahrt in Abhängigkeit einer festgelegten Kollisionsgeometrie (11) hinterlegt ist, wobei das Kollisionsüberwachungsmodul (8) ausgebildet ist, basierend auf der Vorzugsrichtung (VR) die Abrückfahrt zu planen, wenn der Endeffektor (4) mit der festgelegten Kollisionsgeometrie (11) in Kollision steht.

6. Verfahren, insbesondere zum Betreiben der Roboteranordnung (1) nach einem der vorhergehenden Ansprüche, bei dem:
- ein Pfad zur Durchführung einer Aufgabe mittels eines Steuermoduls (8) einer Steuereinrichtung (7) geplant wird;
- ein Roboter (2) durch das Steuermodul (8) angesteuert und eine kinematische Kette (3) und/oder mindestens ein Endeffektor (4) des Roboters (2) zur Durchführung der Aufgabe entlang des Pfads bewegt wird;
- bei einer Kollision des Roboters (2) mit einer Kollisionsgeometrie (11) eine Abrückstrategie basierend auf einem 3D-Modell (12) durch ein Simulationsmodul (10) der Steuereinrichtung (7) simuliert und durch ein Kollisionsüberwachungsmodul (9) der Steuereinrichtung (7) geplant wird, wobei das 3D-Modell (12) als ein CAD-Modell eines Arbeitsbereiches (5) und/oder des Roboters (2) und/oder der Kollisionsgeometrie (11) ausgebildet ist,
**dadurch gekennzeichnet, dass**
in dem 3D-Modell (12) ein Vektorraum (13) um einen Referenzpunkt, insbesondere ein Werkzeugmittelpunkt (WP) des Endeffektors (4), aufgespannt wird, wobei der Vektorraum (13) zumindest mit seinen Eckpunkten (EP) und/oder Mittelpunkten (MP) jeweils einen Richtungspunkt (RP) zur Definition von Richtungsvektoren (14) bildet, wobei der Vektorraum (13) durch einen Quader gebildet ist, der mit seinen Ecken die Eckpunkte (EP) definiert und die Mittelpunkte (MP) jeweils auf den Quaderflächen und den Quaderkanten mittig zwischen den Eckpunkten (EP) angeordnet sind,
wobei mittels einer Kollisionsprüfung ein minimaler Abrückpfad gesucht wird, indem die durch die Richtungsvektoren (14) definierten linearen Pfade ausgehend von dem Referenzpunkt in Richtung der Richtungspunkte (RP) abgetastet werden, wobei bei der Kollisionsprüfung an jedem Abtastpunkt eine Prüfung auf Kollisionsfreiheit durch das Kollisionsüberwachungsmodul (9) durchgeführt wird, wobei ein Punkt als ein kollisionsfreier Abtastpunkt definiert wird, bei dem im Rahmen der Kollisionsprüfung ein Übergang von einer Kollision zu einer Kollisionsfreiheit festgestellt wird, wobei bei einer Ermittlung des kollisionsfreien Abtastpunktes eine zugehörige Distanz (D) zwischen dem Referenzpunkt und dem kollisionsfreien Abtastpunkt in dem Kollisionsüberwachungsmodul (9) hinterlegt wird, wobei auf Basis der hinterlegten Distanzen (D) der minimale Abrückpfad durch das Kollisionsüberwachungsmodul (9) ermittelt wird, eine Abrückfahrt mit dem minimalen Abrückpfad durch das Kollisionsüberwachungsmodul (9) berechnet und an das Steuermodul (8) als die Abrückstrategie übermittelt wird;
- und der Roboter (2) durch das Steuermodul (8) zur Durchführung der Abrückstrategie angesteuert wird.

7. Verfahren nach Anspruch 6, **dadurch gekennzeichnet, dass** zur Umsetzung der Abrückstrategie zuerst die Abrückfahrt und anschließend eine Grundstellungsfahrt durchgeführt wird.

8. Verfahren nach Anspruch 6 oder 7, **dadurch gekennzeichnet, dass** eine Vorzugsrichtung (VR) in dem 3D-Modell (12) für eine festgelegte Kollisionsgeometrie (11) hinterlegt wird, wobei bei einer Kollision des Endeffektors (4) mit der festgelegten Kollisionsgeometrie (11) eine Abrückfahrt in der Vorzugsrichtung (VR) durchgeführt wird.

9. Computerprogramm, insbesondere auf einem Datenträger, zur Durchführung des Verfahrens nach einem der Ansprüche 6 bis 8.

10. Maschinenlesbares Speichermedium, auf dem das Computerprogramm nach Anspruch 9 gespeichert ist.

## Claims

1. Robot arrangement (1)
having a robot (2),
wherein the robot (2) has at least one kinematic chain (3) and at least one end effector (4), wherein the kinematic chain (3) and/or the end effector (4) can be moved in order to perform a task in a work area (5), having a control device (7) for inputting, stipulating and/or setting the task,
wherein the control device (7) has a control module (8) which is designed to plan a path for performing the task and to control the robot (2) on the basis of the path, wherein the control device (7) has a collision monitoring module (9) which is designed to plan a departure strategy if the robot (2) collides with a collision geometry (11) arranged in the work area (5), and wherein the control module (8) is designed to control the robot (2) on the basis of the departure strategy,
wherein the control device (7) has a simulation module (10) which is configured to simulate the departure strategy, wherein a 3D model (12) of the robot arrangement (1) is stored in the simulation module (10), wherein the 3D model (12) is in the form of a CAD model of the work area (5) and/or of the robot (2) and/or of the collision geometry (11),
and wherein the collision monitoring module (9) is designed to calculate a departure journey with a departure path on the basis of the 3D model (12) and to transmit it to the control module (8) as the departure strategy,
**characterized in that**
the simulation module (10) is designed to span a vector space (13) around a reference point, in particular a tool centre point (WP) of the end effector (4), in the 3D model (12), wherein the vector space (13) respectively forms, at least with its corner points (EP) and/or centre points (MP), a direction point (RP) for defining direction vectors (14), wherein the vector space (13) is formed by a cuboid which, with its corners, defines the corner points (EP), and the centre points (MP) are each arranged centrally between the corner points (EP) on the cuboid surfaces and the cuboid edges,
wherein the simulation module (10) is designed to simulate a collision test starting from the reference point by sampling the direction vectors (14) using data technology by virtue of the linear paths defined by the direction vectors (14) being sampled, starting from the reference point, in the direction of the direction points (RP), wherein a point at which a transition from a collision to freedom from a collision is determined during the collision test is defined as a collision-free sampling point, and wherein an associated distance (D) between the reference point and the collision-free sampling point is stored in the collision monitoring module (9),
wherein the collision monitoring module (9) is designed to calculate a minimum departure path on the basis of the distance (D) determined by the collision test and to transmit it to the control module (8) as part of the departure strategy.

2. Robot arrangement (1) according to Claim 1, **characterized in that** a basic position for the robot (2) is stored in the collision monitoring module (9), wherein the collision monitoring module (9) is designed to plan a collision-free basic position journey of the robot (2) from a departure position into the basic position and to transmit it to the control module (8) as part of the departure strategy.

3. Robot arrangement (1) according to Claim 1 or 2, **characterized in that** the simulation module (10) is designed to terminate the collision test for a direction vector (14) if a transition from the collision to the freedom from a collision is determined.

4. Robot arrangement (1) according to one of the preceding claims, **characterized in that** the simulation module (10) is designed to carry out the collision test for each of the direction vectors (14).

5. Robot arrangement (1) according to one of the preceding claims, **characterized in that** a preferred direction (VR) for the departure journey is stored in the 3D model (12) on the basis of a stipulated collision geometry (11), wherein the collision monitoring module (8) is designed to plan the departure journey on the basis of the preferred direction (VR) if the end effector (4) collides with the stipulated collision geometry (11).

6. Method, in particular for operating the robot arrangement (1) according to one of the preceding claims, in which:
- a path for performing a task is planned by means of a control module (8) of a control device (7);
- a robot (2) is controlled by the control module (8) and a kinematic chain (3) and/or at least one end effector (4) of the robot (2) is/are moved along the path for the purpose of performing the task;
- if the robot (2) collides with a collision geometry (11), a departure strategy is simulated by a simulation module (10) of the control device (7) on the basis of a 3D model (12) and is planned by a collision monitoring module (9) of the control device (7), wherein the 3D model (12) is in the form of a CAD model of a work area (5) and/or of the robot (2) and/or of the collision geometry (11),
**characterized in that**
a vector space (13) around a reference point, in particular a tool centre point (WP) of the end effector (4), is spanned in the 3D model (12), wherein the vector space (13) respectively forms, at least with its corner points (EP) and/or centre points (MP), a direction point (RP) for defining direction vectors (14), wherein the vector space (13) is formed by a cuboid which, with its corners, defines the corner points (EP), and the centre points (MP) are each arranged centrally between the corner points (EP) on the cuboid surfaces and the cuboid edges,
wherein a collision test is used to search for a minimum departure path by sampling the linear paths defined by the direction vectors (14), starting from the reference point, in the direction of the direction points (RP), wherein a check for freedom from a collision is carried out by the collision monitoring module (9) at each sampling point during the collision test, wherein a point at which a transition from a collision to freedom from a collision is determined during the collision test is defined as a collision-free sampling point, wherein, when determining the collision-free sampling point, an associated distance (D) between the reference point and the collision-free sampling point is stored in the collision monitoring module (9), wherein the minimum departure path is determined by the collision monitoring module (9) on the basis of the stored distances (D), a departure journey with the minimum departure path is calculated by the collision monitoring module (9) and is transmitted to the control module (8) as the departure strategy;
- and the robot (2) is controlled by the control module (8) to perform the departure strategy.

7. Method according to Claim 6, **characterized in that**, in order to implement the departure strategy, the departure journey is performed first and then a basic position journey.

8. Method according to Claim 6 or 7, **characterized in that** a preferred direction (VR) is stored in the 3D model (12) for a stipulated collision geometry (11), wherein a departure journey is performed in the preferred direction (VR) if the end effector (4) collides with the stipulated collision geometry (11).

9. Computer program, in particular on a data storage medium, for carrying out the method according to one of Claims 6 to 8.

10. Machine-readable storage medium on which the computer program according to Claim 9 is stored.

## Revendications

1. Agencement de robot (1),
comprenant un robot (2),
le robot (2) présentant au moins une chaîne cinématique (3) ainsi qu'au moins un effecteur terminal (4), la chaîne cinématique (3) et/ou l'effecteur terminal (4) pouvant être déplacés pour effectuer une tâche dans une zone de travail (5),
comprenant un dispositif de commande (7) pour entrer, établir et/ou régler la tâche,
le dispositif de commande (7) présentant un module de commande (8) qui est réalisé pour planifier un trajet pour l'exécution de la tâche et pour piloter le robot (2) sur la base du trajet,
le dispositif de commande (7) présentant un module de surveillance de collision (9) qui est réalisé pour planifier une stratégie de retrait en cas de collision du robot (2) avec une géométrie de collision (11) disposée dans la zone de travail (5), et le module de commande (8) étant réalisé pour piloter le robot (2) sur la base de la stratégie de retrait,
le dispositif de commande (7) présentant un module de simulation (10) qui est aménagé pour la simulation de la stratégie de retrait, un modèle 3D (12) de l'agencement de robot (1) étant stocké dans le module de simulation (10), le modèle 3D (12) étant réalisé sous la forme d'un modèle de CAO de la zone de travail (5) et/ou du robot (2) et/ou de la géométrie de collision (11),
et le module de surveillance de collision (9) étant réalisé pour calculer sur la base du modèle 3D (12) une course de retrait avec un trajet de retrait et pour la transmettre au module de commande (8) en tant que stratégie de retrait,
**caractérisé en ce que** le module de simulation (10) est réalisé pour fixer dans le modèle 3D (12) un espace vectoriel (13) autour d'un point de référence, en particulier un centre d'outil (WP) de l'effecteur terminal (4), l'espace vectoriel (13) formant au moins par ses sommets (EP) et/ou ses centres (MP) respectivement un point d'orientation (RP) permettant de définir des vecteurs directionnels (14), dans lequel l'espace vectoriel (13) est formé par un parallélépipède qui définit par ses coins les sommets (EP), et les centres (MP) sont respectivement disposés sur les faces de parallélépipède et les arêtes de parallélépipède de manière centrée entre les sommets (EP),
le module de simulation (10) étant réalisé pour simuler en partant du point de référence un contrôle de collision par un balayage utilisant une technique de données des vecteurs directionnels (14) **en ce que** les trajets linéaires définis par les vecteurs directionnels (14) sont balayés en partant du point de référence en direction des points d'orientation (RP), étant défini comme un point de balayage sans collision un point auquel dans le cadre du contrôle de collision un passage d'une collision à une absence de collision est constaté, et une distance associée (D) entre le point de référence et le point de balayage sans collision étant enregistrée dans le module de surveillance de collision (9),
le module de surveillance de collision (9) étant réalisé pour calculer sur la base de la distance (D) déterminée par le contrôle de collision un trajet de retrait minimal et pour le transmettre au module de commande (8) comme faisant partie de la stratégie de retrait.

2. Agencement de robot (1) selon la revendication 1, **caractérisé en ce qu'**une position initiale pour le robot (2) est enregistrée dans le module de surveillance de collision (9), le module de surveillance de collision (9) étant réalisé pour planifier une course de position initiale sans collision du robot (2) d'une position de retrait à la position initiale et pour la transmettre au module de commande (8) comme faisant partie de la stratégie de retrait.

3. Agencement de robot (1) selon la revendication 1 ou 2, **caractérisé en ce que** le module de simulation (10) est réalisé pour terminer le contrôle de collision pour un vecteur directionnel (14) si un passage de la collision à l'absence de collision est constaté.

4. Agencement de robot (1) selon l'une quelconque des revendications précédentes, **caractérisé en ce que** le module de simulation (10) est réalisé pour effectuer le contrôle de collision pour chacun des vecteurs directionnels (14).

5. Agencement de robot (1) selon l'une quelconque des revendications précédentes, **caractérisé en ce qu'**une direction préférentielle (VR) pour la course de retrait en fonction de la géométrie de collision (11) établie est enregistrée dans le modèle 3D (12), le module de surveillance de collision (8) étant réalisé pour planifier sur la base de la direction préférentielle (VR) la course de retrait lorsque l'effecteur terminal (4) est en collision avec la géométrie de collision (11) établie.

6. Procédé, permettant en particulier de faire fonctionner l'agencement de robot (1) selon l'une quelconque des revendications précédentes, dans lequel :
- un trajet pour l'exécution d'une tâche est planifié au moyen d'un module de commande (8) d'un dispositif de commande (7) ;
- un robot (2) est piloté par le module de commande (8), et une chaîne cinématique (3) et/ou au moins un effecteur terminal (4) du robot (2) sont déplacés le long du trajet pour effectuer la tâche ;
- en cas de collision du robot (2) avec une géométrie de collision (11), une stratégie de retrait sur la base d'un modèle 3D (12) est simulée par un module de simulation (10) du dispositif de commande (7) et est planifié par un module de surveillance de collision (9) du dispositif de commande (7), le modèle 3D (12) étant réalisé comme un modèle de CAO d'une zone de travail (5) et/ou du robot (2) et/ou de la géométrie de collision (11),
**caractérisé en ce que** dans le modèle 3D (12), un espace vectoriel (13) est fixé autour d'un point de référence, en particulier un centre d'outil (WP) de l'effecteur terminal (4), l'espace vectoriel (13) formant au moins par ses sommets (EP) et/ou ses centres (MP) respectivement un point d'orientation (RP) permettant de définir des vecteurs directionnels (14), l'espace vectoriel (13) étant formé par un parallélépipède qui définit par ses coins les sommets (EP), et les centres (MP) sont disposés respectivement sur les faces de parallélépipède et les arêtes de parallélépipède de manière centrée entre les sommets (EP),
dans lequel, au moyen d'un contrôle de collision, un trajet de retrait minimal est recherché **en ce que** les trajets linéaires définis par les vecteurs directionnels (14) sont balayés en partant du point de référence en direction des points d'orientation (RP), dans lequel, lors du contrôle de collision, à chaque point de balayage, un contrôle d'absence de collision est effectué par le module de surveillance de collision (9), étant défini comme un point de balayage sans collision un point auquel un passage d'une collision à une absence de collision est constaté dans le cadre du contrôle de collision, dans lequel, lors d'une détermination du point de balayage sans collision, une distance associée (D) entre le point de référence et le point de balayage sans collision est enregistrée dans le module de surveillance de collision (9), dans lequel, sur la base des distances (D) enregistrées, le trajet de retrait minimal est déterminé par le module de surveillance de collision (9), une course de retrait avec le trajet de retrait minimal est calculée par le module de surveillance de collision (9) et est transmise au module de commande (8) en tant que stratégie de retrait ;
- et le robot (2) est piloté par le module de commande (8) pour exécuter la stratégie de retrait.

7. Procédé selon la revendication 6, **caractérisé en ce que** pour la mise en œuvre de la stratégie de retrait, d'abord la course de retrait et ensuite une course de position initiale sont effectuées.

8. Procédé selon la revendication 6 ou 7, **caractérisé en ce qu'**une direction préférentielle (VR) est enregistrée dans le modèle 3D (12) pour une géométrie de collision (11) établie, dans lequel, en cas de collision de l'effecteur terminal (4) avec la géométrie de collision (11) établie, une course de retrait dans la direction préférentielle (VR) est effectuée.

9. Programme informatique, en particulier sur un support de données, pour l'exécution du procédé selon l'une quelconque des revendications 6 à 8.

10. Support de stockage lisible par machine, sur lequel est stocké le programme informatique selon la revendication 9.
